## Europäisches Patentamt

## European Patent Office

## Office européen des brevets

(11) Numéro de publication: **0 003 452**
**B1**

(12) # FASCICULE DE BREVET EUROPEEN

(45) Date de publication du fascicule de brevet: **13.05.81**

(51) Int. Cl.³: **F 16 D 65/56**

(21) Numéro de dépôt: **79400025.7**

(22) Date de dépôt: **12.01.79**

---

(54) Frein à tambour.

---

(30) Priorité: **23.01.78 FR 7801801**

(43) Date de publication de la demande:
**08.08.79 Bulletin 79/16**

(45) Mention de la délivrance du brevet:
**13.05.81 Bulletin 81/19**

(84) Etats Contractants Désignés:
**DE GB NL SE**

(56) Documents cités:
**DE - A - 1 480 292**
**FR - A - 1 544 028**
**FR - A - 1 582 140**
**FR - A - 2 315 636**

(73) Titulaire: **SOCIETE ANONYME D.B.A.**
**98 boulevard Victor Hugo**
**F-92115 Clichy (FR)**

(72) Inventeur: **Claverie, Jean-Claude**
**Le Hameau de l'Etang**
**F-93470 Coubron (FR)**

(74) Mandataire: **Brullé, Jean et al,**
**Service Brevets Bendix 44, rue François 1er**
**F-75008 Paris (FR)**

---

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Frein à tambour

L'invention se rapport à un frein à tambour susceptible notamment d'équiper un véhicule automobile.

L'invention concerne en particulier un frein à tambour équipé d'un dispositif de réglage automatique destiné à compenser automatiquement l'usure des garnitures de friction associées aux segments de frein de maintenir la course au niveau de la pédale de frein nécessaire à la mise en oeuvre de ce dernier à un niveau sensiblement constant et faible.

On connaît de nombreux freins à tambour équipés de dispositifs de réglage automatique, mais la plupart de ces dispositifs présentent un certain nombre d'inconvénients. En particulier, ces dispositifs assurent le plus souvent le réglage sans distinguer entre l'augmentation de l'écartement des segments due à l'usure des garnitures et celle qui est due à la dilatation du tambour résultant d'un échauffement du frein. Afin d'éviter les risques de surréglage qui en découlent, on est généralement amené à prévoir un jeu fonctionnel important, auquel correspond une grande course morte au niveau de la pédale de commande des freins. On connaît du brevet française No. 2 315 636 un frein à tambour qui permet d'éliminer à peu près totalement cet inconvénient. Ce frein comprend deux segments dont les extrémités adjacentes sont séparées respectivement par un cylindre de roue et par un bloc d'ancrage. Le dispositif de réglage comporte une entretoise disposée entre les segments au voisinage du cylindre de roue et coopérant avec un levier de réglage monté pivotant sur un premier de ces segments, l'extrémité libre de ce levier coopérant avec le segment par l'intermédiaire d'un organe extensible. Cet organe extensible est constitué par un tige filetée immobilisée en rotation par rapport au segment et par un écrou vissé sur cette tige et immobilisé en translation par rapport au levier de réglage, un premier ressort de friction empêchant la rotation de l'écrou dans le sens correspondant au rapprochement de ce dernier par rapport au premier segment. La rotation de l'écrou dans l'autre sens est commandée par un second levier monté pivotant sur le levier de réglage et maintenu en contact permanent avec l'entretoise par des moyens élastiques, l'extrémité libre du second levier définissant une surface de came qui coopère avec l'extrémité repliée d'un second ressort de friction monté sur l'écrou.

Dans un frein de ce type, la mise en oeuvre du cylindre de roue a pour double conséquence d'appliquer les garnitures de friction associées au segment contre le tambour de frein et de faire pivoter le second levier par rapport au levier de réglage, de telle sorte que l'écrou est sollicité en rotation dans le sens correspondant à son éloignement par rapport au premier segment, lors du relâchement du frein. Un tel dispositif permet d'obtenir un réglage limité à des valeurs particulièrement faibles par suite de la double démultiplication obtenue par le levier de réglage et par l'organe extensible que constitue la tige filetée et l'écrou qui lui est associé, de sorte qu'il évite les surréglage inhérents à la majorité des autres dispositifs de réglage connus. En effet, l'usure des garnitures de friction est un phénomène toujours très lent comparé aux dilatations ou aux déformations du tambour, de sorte que le dispositif de réglage qui vient d'être décrit, par suite des valeurs particulièrement faibles du réglage qu'il effectue, ne peut pas compenser les déformations du tambour et ne peut suivre pratiquement que les phénomènes très lents, qui sont les phénomènes liés à l'usure.

Cependant, ce dispositif présente l'inconvénient que le déplacement de la surface de came formée à l'extrémité libre du second levier s'effectue sensiblement parallèlement à l'axe de l'organe extensible alors que le mouvement transmis à l'écrou doit être perpendiculaire à cet axe. Ce mouvement est donc dû entièrement à la forme de la surface de came définie à l'extrémité libre du second levier et conduit à un rendement particulièrement faible du dispositif puisque l'effort de commande transmis par la surface de came au second ressort de friction ne correspond alros qu'à une faible partie de l'effort de pivotement transmis par la biellette au second levier.

L'invention propose un frein à tambour présentant les avantages du frein qui vient d'être décrit, notamment en ce qui concerne l'élimination des risques de surréglage du frein, et dont le rendement est sensiblement augmenté.

Dans ce but, l'invention propose un frein à tambour comprenant deux segments garnis susceptibles d'être sollicités en engagement de friction contre un tambour tournant par des moyens de serrage disposés entre les deux premières extrémités des segments, un bloc d'ancrage fixe disposé entre les deux autres extrémités des segments, une entretoise montée au voisinage des moyens de serrage entre un levier de réglage monté pivotant sur un premier desdits segments et le second segment, un organe extensible disposé entre l'extrémité libre du levier de réglage et le premier segment, ledit organe comprenant un premier élément immobilisé en rotation et un second élément dont la rotation commande l'allongement dudit organe, des moyens de réglage étant prévus pour solliciter en rotation le second élément par l'intermédiaire d'un embrayage unidirectionnel lorsque l'usure des garnitures des segments dépasse une valeur prédéterminée, caractérisé en ce que les moyens de rélage comprennent une biellette susceptible de se déplacer selon une direction sensiblement perpendiculaire à l'axe de l'organe extensible sous l'action d'une contre-biellette maintenue en contact permanent avec l'entretoise par des moyens élastiques, pour solliciter en rotation le second élément de l'organe extensible par l'intermédiaire dudit embrayage unidirectionnel.

Conformément à un autre aspect de l'invention, la biellette est montée pivotante par une première extrémité sur la contre-biellette, des moyens de guidage étant prévus à l'extrémité libre du levier de réglage pour empêcher le déplacement de la seconde extrémité de la biellette selon une direction paralléle à l'axe de l'organe extensible.

Il est clair que grâce à ces caractéristiques, le mouvement de pivotement de la contre-biellette est transformé au niveau de la beillette en un mouvement voisin d'un mouvement de translation, en particulier au niveau de l'extrémité de la biellette qui coopère avec l'embrayage unidirectionnel, de telle sorte que l'effort transmis à ce dernier ainsi que le rendement du dispositif qui en résulte sont sensiblement augmentés.

On décrira maintenant à titre d'exemple non limitatif deux modes de réalisation particuliers de l'invention en se référant aux dessins annexés dans lesquels:

—la figure 1 est une vue en plan d'un frein à tambour réalisé conformément aux enseignements de la présente invention;

—la figure 3 est une vue en coupe selon la ligne 2—2 de la figure 1;

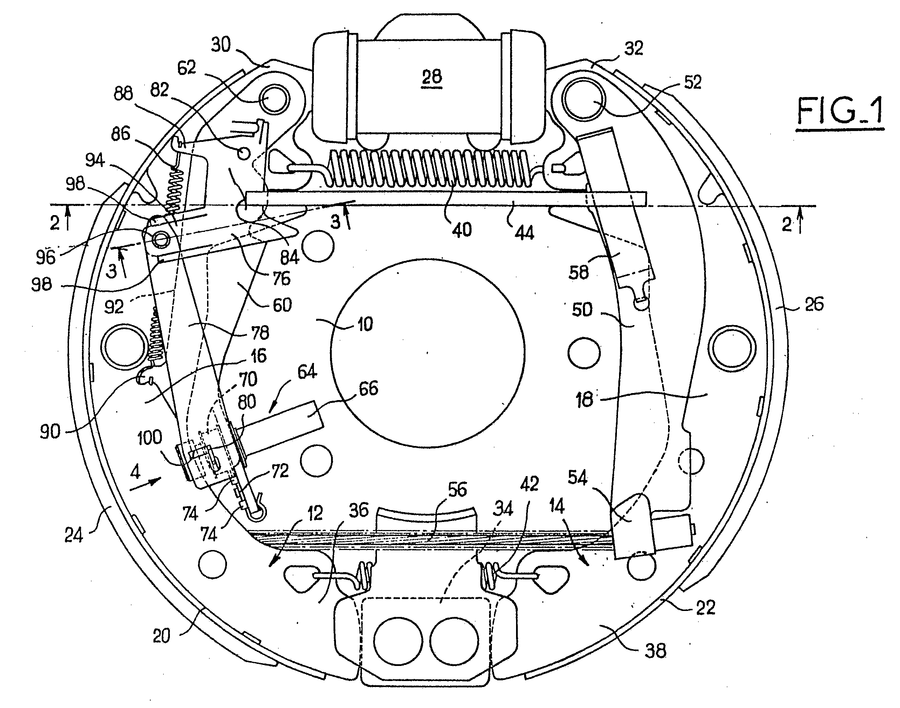

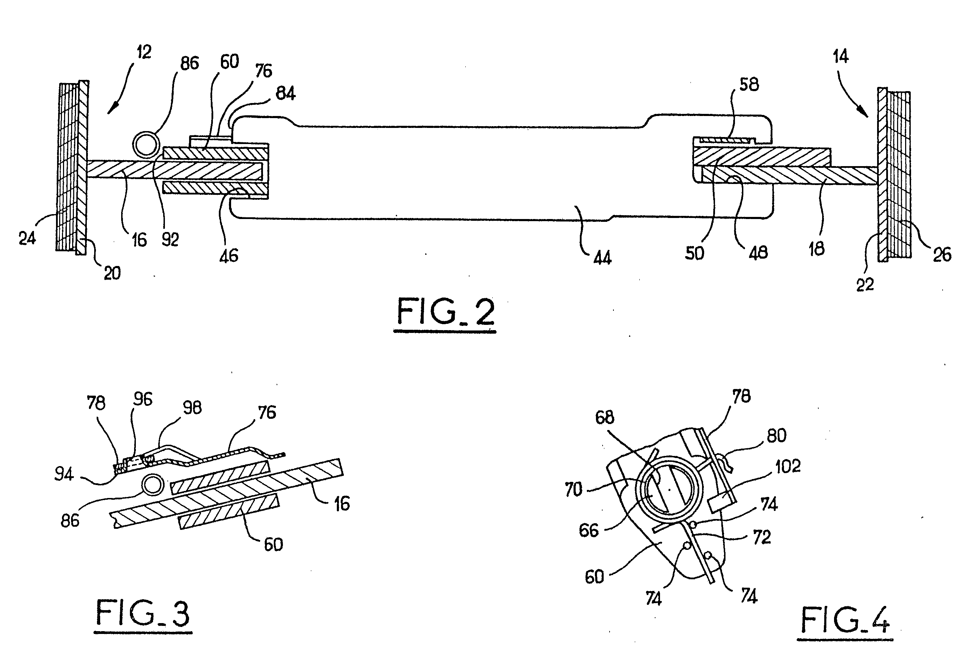

—la figure 3 est une vue en couple selon la ligne 3—3 de la figure 1;

—la figure 4 est une vue en bout prise selon la fléche 4 de la figure 1 et représentant de façon fragmentaire l'extrémité du levier de réglage et de la biellette ainsi que l'organe extensible;

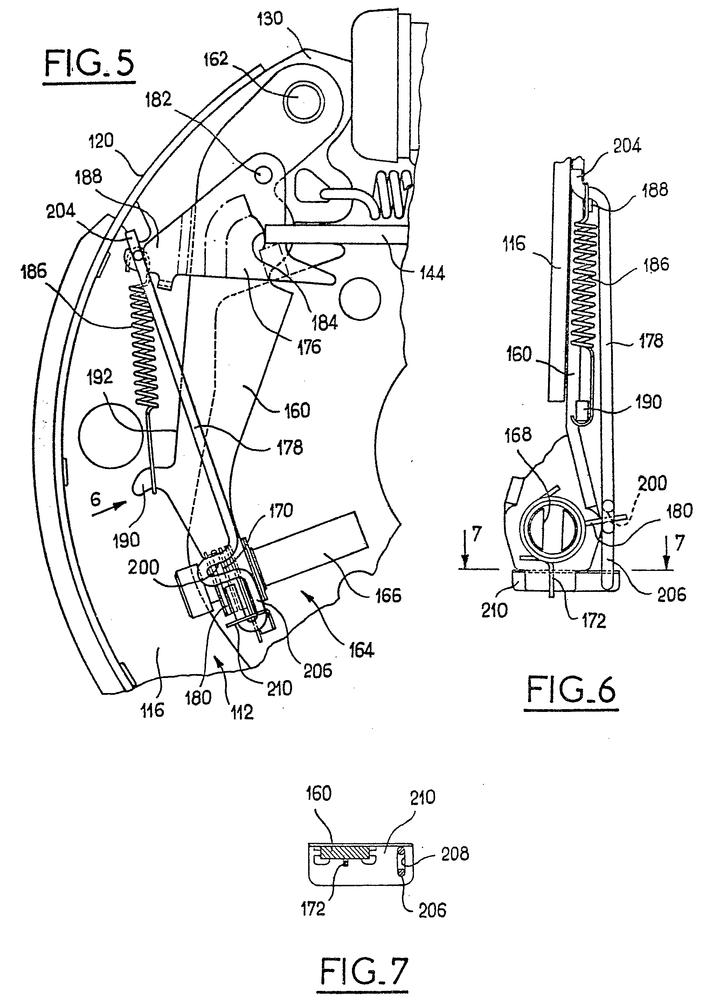

—la figure 5 est une vue fragmentaire représentant un autre mode de réalisation du dispositif de réglage représenté sur la figure 1;

—la figure 6 est une vue prise selon la flèche 6 de la figure 5; et

—la figure 7 est une vue en couple selon la ligne 7—7 de la figure 6.

Le frein à tambour représenté sur la figure 1 comprend une plaque support 10 prévue pour être associée à une partie fixe du véhicule et sur laquelle sont reçus de façon coulissante deux segments de frein 12 et 14. Chacum des segments 12 et 14 comprend une âme sensiblement plane 16, 18 et une jante arquée 20, 22 sur laquelle est montée une garniture de friction 24, 26 respectivement au moyen de rivets, ou analogue. Des moyens de serrage, constitués dans le mode de réalisation représenté par un cylindre de roue 28, sont disposés entre les deux premières extrémités adjacentes 30 et 32 des segments 12 et 14 respectivement, et un bloc d'ancrage 34, associé à la plaque support 10, est disposé entre les deux autres extrémités 36 et 38 des segments 12 et 14. En outre, des ressorts de rappel 40 et 42 sont disposés respectivement au voisinage du cylindre de roue 28 et du bloc d'ancrage 34 afin de solliciter les extrémités 30 et 32 des segments contre le cylindre de roue 28 et les extrémités 36 et 38 des segments contre le bloc d'ancrage 34 respectivement.

Comme le montre plus précisément la figure 2, une entretoise 44 est disposée entre les segments 12 et 14 au voisinage du cylindre de roue 28 de façon à définir la distance séparant au repos les extrémités 30 et 32 des segments. Chacune des extrémités de l'entretoise 44 comporte une encoche en forme de U 46, 48 dans laquelle sont reçues respectivement les âmes 16 et 18 des segments 12 et 14. Dans le mode de réalisation représenté, l'encoche 48 reçoit en outre un levier de frein à main 50 monté pivotant sur l'extrémité 32 du segment 14 au moyen d'un rivet formant pivot 52 et dont l'extrémité libre 54 est repliée pour recevoir une extrémité d'un câble de commande de frein à main 56 dont l'autre extrémité (non-représentée) est prévue pour être reliée à un levier de commande disposé dans le compartiment du conducteur du véhicule. Enfin l'encoche 48 reçoit également un ressort à lame 58 prenant appui à la fois sur l'un des bords de l'encoche et sur le levier 50 de façon à solliciter ce dernier contre l'âme 18 du segment 14 selon une direction sensiblement parallèle à l'axe du tambour de frein (non représenté).

Outre l'âme 16 du segment 12, l'autre encoche 46 ménagée dans l'entretoise 44 reçoit un levier de réglage 60 qui présente en section sur au moins une partie de sa longueur la forme d'un U dont les deux branches extrêmes sont parallèles et disposées en vis-à-vis de chacune des faces de l'âme 16 du segment 12. Le levier de réglage 60 est monté pivotant à l'une de ses extrémités sur l'extrémité 30 du segment 12 au moyen d'un rivet formant pivot 62 et son extrémité libre est reçue en butée contre l'âme 16 du segment 12 par l'intermédiaire d'un organe extensible 64, de telle sorte que la distance existant au repos entre les extrémités 30 et 32 des segments 12 et 14 respectivement varie en fonction de la longueur de l'organe extensible 64.

L'organe extensible 64 est constitué dans le mode de réalisation représenté par une tige filetée 66 dont une extrémité est munie d'une encoche 68 dans laquelle est reçue l'âme 16 du segment 12, et sur laquélle est vissé un écrou 70 qui est maintenu contre le fond du U défini par le levier de réglage 60 par un ressort de friction de maintien à spires 72 reçu sur une surface de révolution appropriée (non représentée) formée sur l'écrou 70 et dont une extrémité est repliée en forme de crochet de façon à immobiliser l'écrou 70 par rapport au levier de réglage 60 selon une direction parallèle à l'axe de l'organe extensible 64, ladite extrémité repliée du ressort de maintien 72 étant en outre disposée entre des plots 74 formés sur le levier 60 de telle sorte que le ressort de maintien 72 est immobilisé en rotation par rapport au levier 60.

Conformément à l'invention, des moyens de réglages sont prévus pour solliciter en rotation l'écrou 70 dans le sens correspondant à l'allongement de la distance définie entre ce dernier et l'âme 16 du segment 12 lorsque l'usure des garnitures 24, 26 dépasse une valeur prédéterminée. Ces moyens de réglage comprenent une contre-biellette 76, une biellettre 78 et un embrayage unidirectionnel comprenant le ressort de friction de maintien à spires 72 et un ressort de friction d'entrainement à spires 80 également reçu sur une surface de révolution appropriée (non représentée) formée sur l'écrou 70. La contre-biellette 76 est constituée par une lame métallique reçue en pivotement sur la face du levier de réglage 60 opposée à l'âme 16 du segment 12 au moyen d'un axe 82 et maintenue en contact permanent avec l'extrémité 84 de l'entretoise 44 sous l'action d'un ressort hélicoïdal 86 dont les deux extrémités sont accrochées respectivement à un prolongement en forme de crochet 88 formé sur la contre-biellette 76 et sur un prolongement en forme de crochet 90 formé sur le levier de réglage 60, chacun des prolongements 88 et 90 s'étendant radialement vers la jante 20 du segment 12 de telle sorte que le ressort 86 se trouve disposé entre la jante 20 du segment 12 et le bord radial externe 92 du levier 60. Il ressort de cette disposition que le ressort 86 a pour effet de solliciter simultanément et en permanence la contre-biellette 76 en contact avec l'extrémité 84 de l'entretoise 44 et l'extrémité libre du levier de réglage 60 en contact avec l'âme 16 du segment 12 par l'intermédiaire de l'organe extensible 64. On remarquera en outre que l'axe de pivotement 82 de la contre-biellette 76 est disposé sensiblement entre l'axe de pivotement 62 du levier de réglage 60 et la partie de la contre-biellette 76 qui coopère avec l'extrémité 84 de l'entretoise 44.

Comme le montrent en particulier les figures 1 et 3, la contre-biellette 76 comporte un second prolongement radial externe 94 dans lequel est formé par emboutissage un pivot 96 sur lequel est reçue en pivotement une première extrémité de la biellette 78. En outre, le prolongement 94 de la contre-biellette 76 comprend deux bras 98 qui permettent d'éviter l'échappement de la biellette 78 par rapport au pivot 96 parallèlement à l'axe du tambour de frein. La biellette 78 est elle-même constituée par une lame métallique qui, conformément à l'invention, définit entre le pivot 96 et son extrémité opposée par laquelle elle coopère avec le ressort de friction 80 un axe sensiblement perpendiculaire à l'axe de l'organe extensible 64.

Comme le montre en particulier la figure 1, la biellette 78 comporte à son extrémité libre un dégagement 100, constitué dans le mode de réalisation représenté par une fente s'étendant sensiblement parallèlement à l'axe de l'organe extensible 64, dans lequel est reçue une extrémité repliée radialement vers l'extérieur du ressort de friction 80. En outre, des moyens de guidage sont prévus à l'extrémité libre du levier de réglage 60 pour empêcher le déplacement de l'extrémité de la biellette 78 dans laquelle est ménagé le dégagement 100 selon une direction parallèle à l'axe de l'organe extensible 64. Comme le montrent en paticulier les figures 1 et 4, ces moyens de guidage sont constitués par une patte recourbée 102 de la biellette 78 qui vient engager la face interne du fond du U défini par le levier de réglage 60, de façon à empêcher le déplacement vers la droite de l'extrémité basse de la biellette 78 par rapport à l'organe extensible 64 en considérant la figure 1, et par l'extrémité repliée du ressort de friction 80 qui vient engager l'extrémité droite du dégagement 100 de façon à empêcher le déplacement vers la gauche de l'extrémité basse de la biellette 78 en considérant la figure 1. Enfin, la largeur du dégagement de la biellette 78 est supérieure à la largeur correspondante de l'extrémité repliée du ressort de friction 80 de façon à définir un jeu prédéterminé au-delà duquel l'écrou 70 est sollicité en rotation par des moyens de réglage que constituent la contre-biellette 76, la biellette 78 et le ressort 80 lors de la mise en oeuvre du cylindre de roue 28.

Le frein à tambour qui vient d'être décrit en se référant aux figures 1 à 4, fonctionne de la façon suivante:

Au repos, et lorsque les garnitures de friction 24 et 26 sont neuves, les différents éléments constituant le frein occupent les positions représentées sur les figures. Lors de la mise en oeuvre du cylindre de roue 28, les extrémités 30 et 32 des segments 12 et 14 sont sollicitées en éloignement l'une de l'autre de telle sorte que les garnitures de friction 24 et 26 sont amenées en engagement avec le tambour de frein (non représenté) de façon à créer un couple de freinage. Simultanément, l'entretoise 44 se déplace vers la droite en considérant la figure 1 avec l'extrémité 32 du segment 14 sous l'action du ressort à lame 58. Sous l'effet du ressort 86 qui maintient l'extrémité libre du levier de réglage 60 en contact permanent avec l'âme 16 du segment 12 par l'intermédiaire de l'organe extensible 64, et la contre-biellette 76 en contact permanent avec l'extrémité 84 de l'entretoise 44, la contre-biellette 76 est sollicitée en rotation dans le sens inverse des aiguilles d'une montre autour de son axe 82. Il en résulte que le pivot 96 formé sur le prolongement 94 de la contre-biellette 76 se déplace selon une direction sensiblement parallèle à l'axe de la biellette 78 par suite du déplacement simultané de l'axe 82 résultant de l'écartement de l'extrémité 30 du segment 12 par le cylindre de roue 28 et du pivotement de la contre-biellette 76 autour de cet axe. La biellette 78 étant par ailleurs guidée à son autre extrémité par la patte 102 et par le ressort 80 se déplace donc vers le bas selon une direction sensiblement parallèle à son axe, ce dernier restant sensiblement perpendiculaire à l'axe de l'organe extensible 64. Lorsque la translation de la biellette 78 est supérieure au jeu prédéterminé existant entre l'extrémité repliée du ressort de friction 80 et le dégagement 100, ce mouvement de la biellette 78 a pour conséquence de solliciter en rotation le ressort de friction 80 dans le sens des aiguilles d'une montre en considérant la figure 4 sur un angle correspondant à l'usure des garnitures de friction 24 et 26 depuis la mise en oeuvre précédente du cylindre de roue 28. Lorsque le ressort de friction 80 est sollicité en rotation dans ce sens, la force de friction qui l'associe à l'écrou 70 tend à diminuer alors que la rotation de l'écrou 70 dans ce sens tend à augmenter la force de friction existant entre l'écrou et le ressort de friction 72. Il en résulte que l'écrou 70 reste immobilisé en rotation et que le ressort 80 tourne autour de cet écrou d'un angle déterminé par l'usure des garnitures 24 et 26. Lorsque le cylindre de roue 28 est relâché, le ressort de rappel 40 tend à ramener les extrémités 30 et 32 des segments 12 et 14 dans leur position de repos. Au cours de ce mouvement, l'extrémité 84 de l'entretoise 44 est sollicitée vers la gauche en considérant la figure 1 et fait pivoter la contre-biellette 76 dans le sens des aiguilles d'une montre autour de son axe 82 selon une angle égal et opposé à l'angle de rotation de cette biellette au cours de la mise en oeuvre du cylindre de roue 28. Il en résulte une translation de la biellette 78 sensiblement parallèlement à son axe, vers le haut en considérant la figure 1, sur une distance égale à la distance de déplacement de cette biellette dans le sens opposé lors de la mise en oeuvre du cylindre de roue, qui a pour conséquence de solliciter le ressort de friction 80 en rotation dans le sens inverse des aiguilles d'une montre en considérant la figure 4 selon un angle égal et opposé à l'angle de rotation de ce ressort autour de l'écrou 70 lors de la mise en oeuvre du frein. Dans ce sens, la force de friction existant entre le ressort de friction 80 et l'écrou 70 tend à augmenter alors que la force de friction existant entre ce dernier et le ressort 72 tend à diminuer, de telle sorte que l'écrou 70 est sollicité en rotation autour de la tige filetée 66 selon un angle correspondant à l'usure des garnitures 24 et 26 qui est intervenue lors de la mise en oeuvre précédente du frein. Cette rotation de l'écrou 70 s'effectue dans le sens correspondant à l'éloignement de cet écrou par rapport à l'âme 16 du segment 12, ce qui a pour conséquence de faire pivoter légèrement le levier de réglage 60 dans le sens inverse des aiguilles d'une montre autour du rivet 62 et donc d'augmenter légèrement la distance séparant au repos les extrémités 30 et 32 des segments 12 et 14 par l'intermédiaire de l'entretoise 44 contre laquelle est amené en butée le levier de réglage 60 lorsque le frein reprend sa position de repos.

L'invention permet à la fois de réaliser un réglage en continu particulièrement précis tout en améliorant très sensiblement le rendement des dispositifs de réglage de ce type connus antérieurement, en particulier par suite de la commande de la rotation du ressort de friction 80 par le déplacement d'une biellette 78 selon une direction sensiblement perpendiculaire à l'axe de l'organe extensible et notamment de l'écrou 70 sur lequel est monté ce ressort de friction 80. En outre, le dispositif de réglage selon l'invention est de réalisation particulièrement simple, et par conséquent peu coûteux et d'un fonctionnement remarquablement sûr.

On a représenté sur les figures 5 à 7 une variante du dispositif de réglage équipant le frein à tambour représenté sur les figures 1 à 4. Dans cette variante, les organes remplissant des fonctions sensiblement identiques à des organes du premier mode de réalisation ont été désignés par les mêmes numéros de référence augmentés de 100.

Le frein à tambour qui fait l'objet de ce second mode de réalisation de l'invention ne diffère du frein à tambour représenté sur la figure 1 que par les moyens de réglage qui commandent l'allongement de l'organe extensible, de sorte que seule une partie de ce frein a été représentée sur la figure 5. Comme dans le mode de réalisation précédent, ces moyens de réglage comprennent une contre-biellette 176 montée de façon pivotante autour d'un axe 182 sur un levier de réglage 160 luimême monté pivotant autour d'un rivet formant pivot 162 sur l'extrémité 130 de l'âme 116 du segment 112. Ces moyens de réglage comprennent également une biellette 178 et un ressort de friction d'entraînement 180, ce dernier étant monté sur une surface de révolution appropriée (non représentée) définie sur un écrou 170 fixé sur une tige filetée 166 qui constitue avec l'écrou 170 un organe extensible 164 disposé entre l'extrémité libre du levier de réglage 160 et l'âme 116 du segment 112. Comme dan le mode de réalisation précédent, l'écrou 170 est associé en translation à l'extrémité libre du levier de réglage 160 et l'âme 116 du segment 112. Comme dans le mode de réalisation précédent, l'écrou 170 est associé en translation à l'extrémité libre du levier de réglage 160 par un ressort de friction de maintien 172 et la tige filetée 166 est immobilisée en rotation par une encoche 168 dans laquelle est reçue l'âme 116 du segment 112. En outre, un ressort hélicoïdal 186 est disposé entre un prolongement en forme de crochet 188 de la contre-biellette 176 et un prolongement en forme de crochet 190 du levier de réglage 160, les prolongements 188 et 190 s'étendant radialement vers la jante arquée 120 du segment 112 de telle sorte que le ressort 186 logé entre la jante arquée 120 et le bord 192 du levier de réglage faisant face à cette dernière. Le ressort 186 sollicite ainsi en permanence la contre-biellette 176 en contact avec une extrémité 184 d'une entretoise 144, et l'extrémité libre du levier de réglage 160 avec l'âme 116 du segment 112 par l'intermédiaire de l'organe extensible 164. Comme dans le mode de réalisation précédent, l'axe 182 de la contre-biellette 176 est disposé sensiblement entre le rivet 162 sur lequel est monté pivotant le levier de réglage 160 et la partie de la contre-biellette 176 qui prend appui contre l'extrémité 184 de l'entretoise 144, et la contre-biellette est constituée par une lame métallique disposée sur la face du levier de réglage 160 opposée à l'âme 116 du segment 112.

La variante représentée sur les figures 5 à 7 diffère essentiellement du premier mode de réalisation de l'invention en ce que la biellette 178 est constituée par une tige métallique sensiblement rectiligne dont l'une des extrémités 204 est repliée en forme de S comme le montre en particulier la figure 6 pour venir prendre appui sur le prolongement en forme de crochet 188 et servir directement de crochet pour l'extrémité supérieure de ressort 186 en considérant les figures 5 et 6. On remarquera qu'une telle disposition présente l'avantage d'éviter la création de jeu au niveau du point de pivotement existant entre la contre-biellette 176 et la biellette 178, puisque le ressort 186 sollicite constamment l'extrémité 204 de la biellette 178 en contact avec le prolongement en forme de crochet 188 de la contre-biellette 176. Comme le montre en particulier la figure 5, l'autre extrémité de la biellette 178 est repliée en forme de U pour définir un dégagement 200 dans lequel est reçue l'extrémité repliée radialement vers l'extérieure du ressort de friction 180. En outre, l'extrémité libre 206 de la biellette 178 est également repliée en forme de U et reçue dans une ouverture appropriée 208 formée dans une plaque 210 associée à l'extrémité de levier de réglage 160 de façon à définir des moyens de guidage empêchant tout déplacement de l'extrémité 206 et de la biellette 178 parallèlement à l'axe de l'organe extensible 164 tout en autorisant le déplacement de la biellette 178 parallèlement à son axe qui s'étend comme dans le mode de réalisation précédant selon une direction sensiblement perpendiculaire à l'axe de l'organe extensible 164.

Le fonctionnement du frein à tambour décrit partiellement sur les figures 5 à 7 et du dispositif de réglage qui lui est associé est le même que celui qui a été décrit en se référant aux figures 1 à 4 de sorte qu'il ne sera pas décrit à nouveau. En outre, les avantages du premier mode de réalisation se retrouvent dans le second mode de réalisation de l'invention.

Il va de soi que les deux freins à tambour qui viennent d'être décrits à titre d'exemple ne limitent pas la portée de l'invention et que celle-ci peut s'appliquer à différentes variantes tenant aussi bien à la nature des moyens de commande du frein qu'à la suppression possible du levier de frein à main. Des modifications peuvent également être envisagées dans le dispositif de réglage luimême, notamment en ce qui concerne la structure et la forme des différents éléments qui le constituent.

En particulier, l'ensemble constitué par les deux ressorts de friction peut être remplacé par tout autre dispositif constituant un embrayage unidirectionnel, et les deux éléments constituant l'organe extensible peuvent être inversés en ce sens que le mouvement de rotation peut être transmis à la tige filetée, l'écrou étant alors immobilisé en rotation par rapport au segment.

## Revendications

1. Frein à tambour comprenant deux segments garnis 12, 112—14) susceptibles d'être sollicités en engagement de friction contre un tambour tournant par des moyens de serrage (28) disposés entre deux premières extrémités (30, 130—32) des segments (12, 112—14), un bloc d'ancrage (34, 134) fixe disposé entre les deux autres extrémités (36, 38) des segments (12, 112—14), une entretoise (44, 144) montée au voisinage des moyens de serrage (28) entre un levier de réglage (60, 160), monté pivotant sur un premier desdits segments (12, 112), et le second segment (14), un organe extensible (64, 164) disposé entre l'extrémité libre du levier de réglage (60, 160) et le premier segment (12, 112), ledit organe (64, 164) comprenant un premier élément (66, 166) immobilisé en rotation et un second élément (70, 170) dont la rotation commande l'allongement dudit organe (64, 164), des moyens de réglage étant prévus pour solliciter en rotation le second élément (70, 170) par l'intermédiaire d'un embrayage unidirectionnel (72,—80, 172—180) lorsque l'usure des garnitures (24, 26) des segments (12, 112—14) dépasse une valeur prédéterminée, caractérisée en ce que les moyens de réglage comprennent une biellette (78, 178) susceptible de se déplacer selon une direction sensiblement perpendiculairement à l'axe de l'organe extensible (64, 164) sous l'action d'une contre-biellette (76, 176) maintenue en contact permanent avec l'entretoise (44, 144) par des moyens élastiques (86, 186), pour solliciter en rotation le second élément (70, 170) de l'organe extensible (64, 164) par l'intermédiaire dudit embrayage unidirectionnel (72—80, 172—180).

2. Frein à tambour selon la revendication 1, caractérisé en ce que la biellette (78, 178) est monté pivotante par une première extrémité sur la contre-biellette (76, 176), des moyens de guidage (102—80—100, 208) étant prévus à l'extrémité libre du levier de réglage (60, 160) pour empêcher le déplacement de la seconde extrémité de la biellette (78; 178) selon une direction parallèle à l'axe de l'organe extensible (64, 164).

3. Frein à tambour selon l'une quelconque des revendications 1 ou 2, caractérisé en ce que lesdits moyens élastiques (86, 186) sont disposés entre la contre-biellette (76, 176) et le levier de réglage (60, 160) de façon à solliciter simultanément la contre-biellette (76, 176) en contact permanent avec l'entretoise (44, 144) et l'extrémité libre du levier de réglage (60, 160) en contact permanent acec le premier segment (12, 112) par l'intermédiaire de l'organe extensible (64, 164).

4. Frein à tambour selon la revendication 3, caractérisé en ce que l'axe de pivotement (82, 182) de la contre-biellette (76, 176) est disposé sensiblement entre l'axe de pivotement (62, 162) du levier de réglage (60, 160) et la partie de la contre-biellette (76, 176) qui coopère avec l'entretoise (44, 144), de telle sorte que les moyens élastiques (86, 186) sollicitent la contre-biellette (76, 176) et le levier de réglage (60, 160) en pivotement dans une direction opposée lors de la mise en oeuvre des moyens de serrage (28).

5. Frein à tambour selon la revendication 4, caractérisé en ce que la contre-biellette (76, 176) coopère avec la biellette (78, 178) en un point (96) qui est décalé radialement vers l'extérieur par rapport à la partie de la contre-biellette (76, 176) qui coopère avec l'entretoise (44, 144).

6. Frein à tambour selon l'une quelconque des revendications 3 à 5, caractérisé en ce que lesdits moyens élastiques (86, 186) comprennent un ressort hélicoïdal dont la première extrémité est associée à la contre-biellette (76, 176) au voisinage du point par lequel la contre-biellette (76, 176) coopère avec la biellette (78, 178), et dont la seconde extrémité est associée au levier de réglage (60, 160) au voisinage de l'extrémité libre de ce dernier.

7. Frein à tambour selon la revendication 6, caractérisé en ce que chacun des segments (12, 112—14) comprend une âme (16, 116—18) sensiblement plane et une jante (20, 120—22) arquée sur laquelle est montée une garniture de friction (24, 26), le levier de réglage (60, 160) étant constitué par au moins une plaque sensiblement plane montée pivotante sur l'âme (16, 116) du premier segment (12, 112) de facon à définir un bord radial interne et un bord radial externe (92, 192), ledit ressort (86, 186) étant disposé entre le bord radial externe (92, 192) du levier de réglage (60, 160) et la jante (20, 120) du premier segment (12, 112).

8. Frein à tambour selon la revendication 7, caractérisé en ce que la contre-biellette (76, 176) est constituée par une lame métallique reçue en pivotement sur la face du levier de réglage (60, 160) opposée à l'âme (16, 116) du premier segment (12, 112), la contre-biellette (76, 176) et le levier de réglage (60, 160) comprenant chacun au moins un prolongement (88, 188—90, 190) en forme de crochet s'étendant radialement vers la jante (20, 120) du premier segment (12, 112) pour recevoir chacune des extrémités dudit ressort (86, 186).

9. Frein à tambour selon la revendication 8 prise en combinaison avec la revendication 2, caractérisé en ce que la biellette (78) est constituée par une lame métallique montée pivotante par sa première extrémité sur un second prolongement (94) de la contre-biellette (76) s'étendant radialement vers la jante (20) du premier segment (12), et dont la second extrémité coopère avec lesdits moyens de guidage (102—80—100) associés à l'extrémité libre du levier de réglage (60).

10. Frein à tambour selon la revendication 8 prise en combinaison avec la revendication 2, caractérisé en ce que la biellette (178) est constituée par une tige métallique sensiblement rectiligne, dont la première extrémité (204) est repliée dans le prolongement (188) en forme de crochet de la contre-biellette (176) de façon à recevoir l'extrémité correspondante du ressort (186) et dont la seconde extrémité (206) coopère avec lesdits moyens de guidage (208) associés à l'extrémité libre du levier de réglage (160).

11. Frein à tambour selon l'une quelconque des revendications précédentes, caractérisé en ce que l'embrayage unidirectionnel comprend un ressort de friction d'entraînement (80—180) reçu sur une surface de révolution appropriée formée sur le second élément (70, 170) de l'organe extensible (64, 164), le ressort de friction d'entraînement (80, 180) comportant une extrémité repliée qui pénètre dans un dégagement (100, 200) ménagé dans la seconde extrémité de la biellette (78, 178).

12. Frein à tambour selon la revendication 11, caractérisé en ce que la largeur du dégagement (100, 200) parallèlement à l'axe de la biellette (78,178) est supérieure à la largeur correspondante de l'extrémité repliée du ressort de friction d'entraînement (80, 180) de façon à définir ladite valeur prédéterminée au-delà de laquelle le second élément (70, 170) de l'organe extensible (64, 164) est sollicité en rotation par les moyens de réglage (76—78—80, 176—178—180).

13. Frein à tambour selon l'une quelconque des revendications précédentes, caractérisé en ce que des moyens (72, 172) sont prévus pour associer en translation le second élément (70, 170) de l'organe extensible (64, 164) et l'extrémité libre du levier de réglage (60, 160).

14. Frein à tambour selon la revendication 13, caractérisé en ce que l'embrayage unidirectionnel comprend un ressort de friction de maintien (72, 172) reçu sur une seconde surface de révolution appropriée formée sur le second élément (70, 170) de l'organe extensible (64, 164), le ressort de friction de maintien (72, 172) comportant une extrémité repliée par laquelle il est associé en translation et en rotation à l'extrémité libre du levier de réglage (60, 160).

15. Frein à tambour selon l'une quelconque des revendications prédédentes, caractérisé en ce que chacun des segments (12, 112—14) comprend une âme (16, 116—18) sensiblement plane et une jante arquée (20, 120—22) sur laquelle est montée une garniture de friction (24, 26), le premier élément (66, 166) de l'organe extensible (64, 164) comprenant une tige filetée dont l'une des extrémités est fendue de façon à recevoir l'âme (16, 116) du premier segment (12, 112), le second élément (70, 170) comprenant un écrou vissé sur la tige filetée.

### Claims

1. A drum brake comprising two lined shoes (12, 112—14) which can be urged into frictional engagement with a rotary drum by brake applying means (28) situated between two first ends (30, 130—32) of the shoes (12, 112—14), a fixed fulcrum block (34, 134) situated between the other two ends (36, 38) of the shoes (12, 112—14), a spacer (44, 144) mounted in the vicinity of the brake applying means (28) between an adjusting lever (60, 160) pivoted on a first one of the shoes (12, 112), and the second shoe (14), an extensible member (64, 164) situated between the free end of the adjusting lever (60, 160) and the first shoe (12, 112), said member (64, 164) comprising a first element (66, 166) prevented from rotating and a second element (70, 170) rotation of which causes the member (64, 164) to extend, adjusting means being provided to rotate the second element (70, 170) through a one-way coupling (72—80, 172, 180) when the wear on the linings (24, 26) of the shoes (12, 112—14) exceeds a predetermined value, characterised in that the adjusting means comprise a link (78, 178) capable of moving in a direction substantially perpendicular to the axis of the extensible member (64, 164) under the influence of a counter-link (76, 176) kept in permanent contact with the spacer (44, 144) by resilient means (86, 186), so as to rotate the second element (70, 170) of the extensible member (64, 164) by way of said one-way coupling (72—80, 172—180).

2. A drum brake as claimed in claim 1, characterised in that the link (78, 178) is pivoted by means of a first end on the counter-link (76, 176), guide means (102—80—100—208) being provided at the free end of the adjusting lever (60, 160) to prevent the second end of the link (78, 178) from moving in a direction parallel to the axis of the extensible member (64, 164).

3. A drum brake as claimed in claim 1 or 2, characterised in that the resilient means (86, 186) are situated between the counter-link (76, 176) and adjusting lever (60, 160) so as to simultaneously urge the counter-link (76, 176) into permanent contact with the spacer (44, 144) and the free end of the adjusting lever (60, 160) into permanent contact with the first shoe (12, 112) by way of the extensible member (64, 164).

4. A drum brake as claimed in claim 3, characterised in that the pivoting axis (82, 182) of the counter-link (76, 176) is situated substantially between the pivoting axis (62, 162) of the adjusting lever (60, 160) and that portion of the counter-link (76, 176) cooperating with the spacer (44, 144), so that the resilient means (86, 186) cause the counter link (76, 176) and adjusting lever (60, 160) to pivot in an opposite direction when the brake applying means (28) operate.

5. A drum brake as claimed in claim 4, characterised in that the counter-link (76, 176) cooperates with the link (78, 178) at a point (96) which is offset radially outwards relative to that portion of the counter-link (76, 176) cooperating with the spacer (44, 144).

6. A drum brake as claimed in any of claims 3 to 5, characterised in that the resilient means (86, 186) comprise a helical spring of which the first end is associated with the counter-link (76,176) in the vicinity of the point at which the counter-link (76, 176) cooperates with the link (78, 178), whereas its second end is associated with the adjusting lever (60, 160) in the vicinity of the free end of the latter.

7. A drum brake as claimed in claim 6, characterised in that each of the shoes (12, 112—14) comprise a substantially flat web (16, 116—18) and an arcuate rim (20, 120—22) on which a friction lining (24, 26) is mounted, the adjusting lever (60, 160) comprising at least one substantially flat plate pivoted on the web (16, 116) of the first shoe (12, 112) so as to define an inner radial edge and an outer radial edge (92, 192), said spring (86, 186) being situated between the outer radial edge (92, 192) of the adjusting lever (60, 160) and the rim (20, 120) of the first shoe (12, 112).

8. A drum brake as claimed in claim 7 characterised in that the counter-link (76, 176) comprises a metal blade pivoted on that surface of the adjusting lever (60, 160) remote from the web (16, 116) of the first shoe (12, 112), the counter-link (76, 176) and adjusting lever (60, 160) each comprising at least one extension (88, 188—90, 190) in the form of a hook extending radially towards the rim (20, 120) of the first shoe (12, 112) to receive respective ends of the springs (86, 186).

9. A drum brake as claimed in claims 2 and 8 combined, characterised in that the link (78) comprises a metal blade pivoted by its first end on a second extension (94) of the counter-link (76) extending radially towards the rim (20) of the first shoe (12), and of which the second end cooperates with the guide means (102—80—100) associated with the free end of the adjusting lever (60).

10. A drum brake as claimed in claims 2 and 8 combined characterised in that the link (178) comprises a substantially straight metal rod of which the first end (204) is bent in the hooked extension (188) of the counter-link (176) to receive the corresponding end of the spring (186) and of which the second end (206) cooperates with the guide means (208) associated with the free end of the adjusting-lever (160).

11. A drum brake as claimed in any of the preceding claims, characterised in that the one-way coupling comprises a driving friction spring (80, 180) received on an appropriate surface of revolution formed on the second element (70, 170) of the extensible member (64, 164), the driving friction spring (80, 180) comprising a bent end which enters a recess (100, 200) in the second end of the link (78, 178).

12. A drum brake as claimed in claim 11, characterised in that the width of the recess (100, 200) parallel to the axis of the link (78, 178) is greater than the corresponding width of the bent end of the driving friction spring (80, 180), in order to define the said predetermined value beyond which the second element (70, 170) of the extensible member (64, 164) is rotated by the adjusting means (76—78—80, 176—178—180).

13. A drum brake as claimed in any of the preceding claims, characterised in that means (72, 172) are provided for connecting the second element (70, 170) of the extensible member (64, 164) to the free end of the adjusting lever (60, 160) in respect of translatory motion.

14. A drum brake as claimed in claim 13, characterised in that the one-way coupling comprises a locking friction spring (72, 172) received on a second appropriate surface of revolution formed on the second element (70, 170) of the extensible member (64, 164), the locking friction spring (72, 172) comprising a bent end by which it is associated with the free end of the adjusting lever (60, 160) in respect of translatory and rotary motion.

15. A drum brake as claimed in any of the preceding claims, characterised in that each of the shoes (12, 112—14) comprises a substantially flat web (16, 116—18) and an arcuate rim (20, 120—22) on which a friction lining (24, 26) is mounted, the first element (66, 166) of the extensible member (64, 164) comprising a threaded rod of which one end is slotted to receive the web (16, 116) of the first shoe (12, 112), the second element (70, 170) comprising a nut received on to the threaded rod.

## Patentansprüche

1. Trommelbremse mit zwei mit Reibbelägen versehenen Bremsbacken (12, 14, 112, 114), welche durch eine Betätigungseinrichtung (28), die an ersten Enden der Bremsbacken (12, 14, 112, 114) angreift, im Reibschluß gegen eine umlaufende Bremstrommel anlegbar sind, mit einem feststehenden Verankerungsblock (34, 134), welcher zwischen den zweiten Enden der Bremsbacken (12, 14, 112, 114) angeordnet ist, mit einem Abstandskörper (44, 144), der in der Nach barschaft der Betätigungseinrichtung (28) zwischen einem Einstellhebel (60, 160), der seinerseits verschwenkbare auf einem der Bremsbacken (12, 112) angeordnet ist, und dem zweiten der Bremsbacken (14, 114) angeordnet ist, mit einer verlagerbaren Strebe (64, 164), die zwischen dem freien Ende des Einstellhebels (60, 160) und dem ersten Bremsbacken (12, 112) angeordnet ist und ein drehfest angeordnetes erstes Strebenteil (66, 166) und ein zweites Strebenteil (70, 170) aufweist, dessen Drehung die Verlängerung der Strebe (64, 164) vorgibt, und mit einem Nachstellgetriebe, durch welches das zweite Strebenteil (70, 170) über eine Einwegkupplung (72—80, 172—180) in Drehung versetzbar ist, wenn der Verschleiß der Beläge (24, 26) der Bremsbacken (12, 14, 112, 114) einen vorgegebenen Wert überschreitet, dadurch gekennzeichnet, daß das Nachstellgetriebe eine Stange (78, 178) aufweist, welche durch eine durch elastische Mittel (86, 186) in ständiger Anlage am Abstandskörper (44, 144) gehaltene Gegenstange (76, 176) im wesentlichen in zur Achse der verlängerbaren Strebe (64, 164) senkrechter Richtung verlagerbar ist, um das zweite Strebenteil (70, 170) der verlängerbaren Strebe (64, 164) über die Einwegkupplung (72—80, 172—180) in Drehung zu versetzen.

2. Trommelbremse nach Anspruch 1, dadurch gekennzeichnet, daß die Stange (78, 178) verschwenkbar auf einem ersten Ende der Gegenstange (76, 176) angeordnet ist und daß am freien Ende des Einstellhebels (60, 160) Führungsmittel (102—80—100, 208) vorgesehen sind, welche ein Verlagern des zweiten Endes der Stange (78, 178) in einer solchen Richtung verhindern, welche parallel zur Achse der Verlängerbaren Strebe verläuft.

3. Trommelbremse nach Anspruch 1 oder 2, dadurch gekennzeichnet, daß die elastischen Mittel (86, 186) zwischen der Gegenstange (76, 176) und dem Einstellhebel (60, 160) derart angeordnet sind, daß sie gleichzeitig die Gegenstange (76, 176) in ständiger Anlage an dem Abstandskörper (44, 144) halten und das freie Ende des Einstellhebels (60, 160) über die verlängerbare Strebe (64, 164) in ständiger Anlage an der ersten Bremsbacke (12, 112) halten.

4. Trommelbremse nach Anspruch 3, dadurch gekennzeichnet, daß die Schwenkachse (82, 182) der Gegenstange (76, 176) im wesentlichen zwischen der Schwenkachse (62, 162) des Einstellhebels (60, 160) und demjenigen Abschnitt der Gegenstange (76, 176) angeordnet ist, der mit dem Abstandskörper (44, 144) zusammenarbeitet, derart, daß die elastischen Mittel (86, 186) die Gegenstange (76, 176) und den Einstellhebel (60, 160) in einer Schwenkrichtung unter Vorspannung setzen, die derjenigen entgegengesetzt ist, in welcher sie bei Arbeiten der Betätigungseinrichtung (28) bewegt werden.

5. Trommelbremse nach Anspruch 4, dadurch gekennzeichnet, daß die Gegenstange (76, 176) mit der Stange (78, 178) an einem Punkt (96) zusammenarbeitet, der bezogen auf den mit dem Abstandskörper (44, 144) zusammenarbeitenden Abschnitt der Gegenstange (76, 176) in radialer Richtung nach außen versetzt ist.

6. Trommelbremse nach einem der Ansprüche 3 bis 5, dadurch gekennzeichnet, daß die elastischen Mittel (86, 186) durch eine Schraubenfeder gebildet sind, deren erstes Ende mit der Gegenstange (76, 176) in der Nachbarschaft desjenigen Punktes verbunden ist, an dem die Gegenstange (76, 176) mit der Stange (78, 178) zusammenarbeiten, und deren zweites Ende mit dem Einstellhebel (60, 160) in der Nachbarschaft von dessen freiem Ende verbunden ist.

7. Trommelbremse nach Anspruch 6, dadurch gekennzeichnet, daß ein jeder der Bremsbacken (12, 14, 112, 114) einen im wesentlichen ebenen Steg (16, 18, 116, 118) und einen Kreisbogenförmigen Felgenkörper (20, 22, 120, 122) aufweist, auf dem ein Reibbelag (24, 26) angebracht ist, daß der Einstellhebel (60, 160) durch mindestens eine im wesentlichen ebene Platte gebildet ist, die verschwenkbar auf dem Steg (16, 116) der ersten Bremsbacke (12, 112) derart angebracht ist, daß ein radial innenliegender Rand und ein radial außenliegender Rand (92, 192) vorgegeben wird, und daß die Feder (86, 186) zwischen dem radial außenliegenden Rand (92, 192) des Einstallhebels (60, 160) und dem Felgenkörper (20, 120) der ersten Bremsbacke angeordnet ist.

8. Trommelbremse nach Anspruch 7, dadurch gekennzeichnet, daß die Gegenstange (76, 176) durch ein Blechteil gebildet ist, welches verschwenkbar auf der Stirnfläche des Einstellhebels (60, 160) angeordnet ist, welche dem Steg (16, 116) der ersten Bremsbacke (12, 112) gegenüberliegt, und daß die Gegenstange (76, 176) und der Einstellhebel (60, 160) jeweils mindestens eine hakenförmige Verlängerung (88, 188—90, 190) aufweisen, welche sich in radialer Richtung zum Felgenkörper (20, 120) der ersten Bremsbacke (12, 112) erstrecken, um jeweils eines der Enden der Feder (86, 186) aufzunehmen.

9. Trommelbremse nach Anspruch 8 in Kombination mit Anspruch 2, dadurch gekennzeichnet, daß die Stange (78) durch ein Blechteil gebildet ist, welches an seinem einen Ende verschwenkbar auf einer zweiten Verlängerung (94) der Gegenstange (76) angeordnet ist, wobei sich diese letztgenannte Verlängerung in radialer Richtung zu dem Felgenkörper (20) der ersten Bremsbacke (12) erstreckt und wobei das zweite Ende dieses Blechteiles mit den Führungsmitteln (102—80—100) zusammenarbeitet, welche dem freien Ende des Einstellhebels (60) zugeordnet sind.

10. Trommelbremse nach Anspruch 8 im Kombination mit Anspruch 2, dadurch gekennzeichnet, daß die Stange (178) durch eine im wesentlichen geradlinige metallische Stange gebildet ist, deren erstes Ende (204) in die hakenförmige Verlängerung (188) der Gegenstange (176) derart zurückgebogen ist, daß das entsprechende Ende der Feder (186) Aufnahme findet, und deren zweites Ende (206) mit den dem freien Ende des Einstellhebels (106) zugeordneten Führungsmittel (208) zusammenarbeitet.

11. Trommelbremse nach einem der vorstehenden Ansprüche, dadurch gekennzeichnet, daß die Einwegkupplung eine Reibschleppfeder (80—180) aufweist, welche von einer auf dem zweiten Strebenteil (70, 170) der verlängerbaren Strebe (64, 164) ausgebildeten rotationssymmetrischen Oberfläche Aufnahme findet, und daß die Reibschleppfeder (80, 180) ein umgebogenes Ende aufweist, welches in eine Ausnehmung (100, 200) eingreift, die in dem zweiten Ende der Stange (78, 178) ausgebildet ist.

12. Trommelbremse nach Anspruch 11, dadurch gekennzeichnet, daß die Breite der Ausnehmung (100, 200) in zur Achse der Stange (78, 178) paralleler Richtung größer ist als die entsprechende Breite des umgebogenen Endes der Reibschleppfeder (80, 180), derart, daß so der vorgegebene Wert festgelegt wird, bei dessen Überschreitung das zweite Strebenteil (70, 170) der verlängerbaren Strebe (64, 164) durch das Nachstellgetriebe (76—78—80, 176—178—180) in Drehung versetzt wird.

13. Trommelbremse nach einem der vorstehenden Ansprüche, dadurch gekennzeichnet, daß Mittel (72, 172) vorgesehen sind, um das zweite Strebenteil (70, 170) der verlängerbaren Strebe (64, 164) und das freie Ende des Einstellhebels (60, 160) translationsbewegungsmäßig zu koppeln.

14. Trommelbremse nach Anspruch 13, dadurch gekennzeichnet, daß die Einwegkupplung eine im Reibschluß arbeitende Haltefeder (72, 172) aufweist, die in einer auf dem zweiten Strebenteil (70, 170) der verlängerbaren Strebe (64, 164) ausgebildeten geeigneten zweiten rotationssymmetrischen Oberfläche Aufnahme findet, und daß die im Reibschluß arbeitende Haltefeder (72, 172) ein Ende aufweist, das parallel zu demjenigen umgebogen ist, welches translationsbewegungsmäßig und rotationsbewegungsmäßig mit dem freien Ende des Einstellhebels (60, 160) verbunden ist.

15. Trommelbremse nach einem der vorstehenden Ansprüche, dadurch gekennzeichnet, daß die jeder der Bremsbacken (12, 112—14) einen Steg (16, 116—18) aufweist, der im wesentlichen eben ist, und mit einem bogenförmigen Felgenkörper (20, 120—22) versehen ist, auf welchem ein Reibbelag (24, 26) angebracht ist, daß das erste Strebenteil (60, 166) der verlängerbaren Strebe (64, 164) durch eine Gewindestange gebildet ist, deren eines Ende so geschlitzt ist, daß es den Steg (16,116) der ersten Bremsbacke (12, 112) aufnimmt, und daß das zweite Strebenteil (70, 170) durch eine Mutter gebildet ist, welche auf der Gewindestange läuft.

FIG_1

0 003 452

FIG. 2

FIG. 3

FIG. 4

0 003 452

FIG.5

FIG.6

FIG.7